# EUROPEAN PATENT APPLICATION

(11) **EP 4 847 165 A1**
(43) Date of publication of application: **02.12.2026**
(21) Application number: 26182069.0
(22) Date of filing: 29.05.2026
(51) Int. Cl.: B22F 3/00, A44C 3/00, A44C 21/00, B22F 3/03, B30B 11/00, B30B 11/02, B30B 15/00, B30B 15/26, B30B 15/30, G01G 13/00, A44C 27/00, F27B 5/00

(54) **PLANT FOR THE PRODUCTION OF SEMI-FINISHED COINING PRODUCTS BY POWDER SINTERING AND RELATED AUTOMATED PROCESS FOR THE MANUFACTURE OF SUCH SEMI-FINISHED COINING PRODUCTS**

(30) Priority: 30.05.2025 IT 202500012661
(71) Applicant: Tera Automation Srl, 52014 Poppi (AR) (IT)
(72) Inventor: FIORINI, Luca, 52014 POPPI (AR) (IT)
(74) Representative: Fabbriciani, Simone

(57) **Abstract**

Described is a plant (101) for the production of semi-finished coining products by powder sintering and the related automated process for producing the same semi-finished coining products, which will then be used for minting coins, medals and ingots.

The plant (101) comprises a dosing station (10) for dosing metal powder, a pressing station (20) for pressing the metal and a sintering zone (30) interconnected to each other by means of a control unit. The dosing station (10) comprises at least one dosing device for dosing the metal powder associated with a plurality of fillable dosing cups, each configured to receive a predetermined quantity of metal powder; a conveyor of the metal powder towards a discharge; and a weighing unit, positioned under each dosing cup, configured to determine the weight of the dose in real time.

The pressing station (20) is provided with a hydraulic press for compacting the metal powder into blanks.

The sintering zone (30) includes a sintering furnace suitable for receiving the blanks at regular intervals.

The control unit is suitable for moving the dosing cups between the dosing station (10), the pressing station (20) and the sintering zone (30).

## Description

The present invention relates to a plant for the production of semi-finished coining products (commonly known as "blanks"), by powder sintering, and to the related automated process for producing those blanks.

A blank is a semi-processed product that will subsequently be machined (for example by moulding, milling, forging or other mechanical processing) until the finished product is obtained.

In particular, a blank is a metal disc or rectangle which is not yet minted, intended to become a coin or a medal or an ingot after being stamped (with the image, reliefs, nominal value, etc.).

The production of coins and medals and minted ingots has seen in recent years a growing interest in alternative methodologies to the traditional mechanical coining, which is based on the plastic deformation of a die made from metal tape. Conventional solutions, although consolidated, have some significant disadvantages: lengthy production cycles, high energy consumption, material waste and difficulties in integrating anti-counterfeiting systems directly into the structure of the product.

In the face of these limitations, alternative approaches have been developed based on the use of powder metallurgy and, more recently, on additive technologies.

One important example is described in patent document DE 10 2013 226495 (A1), in which sintering is introduced as an alternative to the traditional coining. The coin is obtained through a three-step process: compression of the metal powder, sintering heat treatment and final forming for the definition of the reliefs. The alloys used, based on aluminium, iron or copper, aim to reduce costs, avoiding the use of noble metals.

Although the process allows a greater freedom in the selection of the materials and improves the aesthetic quality of the reliefs, there is no controlled dosing of the powder before compaction, a factor that requires a control of the weight in a subsequent step.

In addition, the process described is entirely manual: the movement of the blank between the various steps requires the intervention of the operator, hindering the automation of the entire cycle.

A different perspective is offered by patent document DE 10 2015 117459 (A1), where the attention is focused on anti-counterfeiting functionalities. The use of materials with differentiated magnetic properties is introduced, which allow an easier identification of the coin in the automatic verification devices and complicates the illicit reproduction. The sequence of the process remains substantially unchanged, with pressing, sintering and forming.

Also in this case, however, the powder is not dosed in a controlled manner before compaction, resulting in the need for ex-post controls to ensure uniformity of the weight and of the dimensions.

The movement of the blank between the steps remains manual or in any case not completely automated.

In patent document DE 10 2014 215337 (A1) the metallurgical approach is further expanded, focusing on the composition of the powder used. Mixtures of metal powders with carefully selected magnetic and non-magnetic properties are specified, in order to optimise the resistance of the coin and strengthen its identifiability through unique magnetic signatures.

Here too, the process takes up the three canonical steps, but still does not include a system for the preventive dosing of the powder. The absence of this function limits the precision of the process and imposes subsequent checks for the compliance with the dimensional parameters.

In this solution, as in the others already seen, the process remains only partially automated, as the coins must be transferred manually or semiautomatically between the various operating stations.

The Applicant therefore considers that at the current state of the art two fundamental critical issues for a modern and efficient production have not yet been satisfactorily resolved: the precise dosing of the powder before the pressing and the full automation of the process.

Both of these shortcomings imply the need for subsequent checks on the weight and dimensional conformity of the coins, hindering a continuous and waste-free production.

In particular, the lack of a precise dosing step of the powder entails the need to check the weight of the coins after the sintering and, in some cases, to adjust it manually.

Relying on a manual process, which requires manipulation between the various steps, increases production times and operating costs.

The purpose of the invention is to eliminate the above-mentioned drawbacks in prior art types of plant for the production of blanks by powder sintering, which allows the accurate dosing of a predetermined quantity of metal powder for each blank to be produced, before the pressing step, so as to ensure compliance of the weight and size parameters from the initial step of the process.

The invention also relates to a device suitable for the controlled positioning and distribution of the powders, configured in such a way as to minimise the losses of material and ensure a uniform deposition, in order to obtain a final product characterised by structural symmetry and homogeneity.

In the context of the above-mentioned purpose, an aim of the invention is to create a plant for the production of blanks by powder sintering that is fully automated, capable of accurately dosing the quantity of metal powder to be used for each blank without the need for manual interventions between the various steps of the process.

Another aim of the invention is to allow an automated process for the production of economical and versatile blanks.

A further aim of the plant and of the process for production of blanks set forth herein is to be applicable on a large scale in the monetary sector and the industrial production of ingots.

This purpose, as well as these and other aims which are described in more detail below, are achieved by a plant for the production of a semi-finished coining blank by powder sintering and by the related automated process for producing the blank itself, according to the invention, comprising the technical features set forth in one or more of the appended claims. The dependent claims correspond to possible different embodiments of the invention.

In particular, according to a first aspect, the present invention relates to a plant for the production of blanks by means of powder sintering, comprising a metal powder dosing station, a powder metal pressing station and a sintering zone. These stations and zone are interconnected with each other by means of a control unit and by means of robots.

The dosing station provides at least one metal powder dosing device associated with a plurality of fillable dosing cups. Each dosing cup is therefore configured to receive a predetermined quantity of metal powder. Each dosing device is provided with a conveyor of the metal powder towards a discharge. A very precise weighing unit is mounted under each dosing cup, configured to determine the weight of the dose in real time.

Obviously, this station includes means of transport for the dosing cups: at the inlet for the empty dosing cups and at the outlet for cups with the correctly dosed quantity of powder.

Preferably, there is also a second conveyor at the outlet for cups with out-of-tolerance doses.

Further, there is a powder collection and deposition station, configured to distribute the material along a predetermined deposition path, and provided with a buffering system suitable for making the distribution of the powders before the pressing step uniform.

In the pressing station there is a hydraulic press for compacting the metal powder into blanks. The sintering zone provides for the presence of a sintering furnace suitable for receiving the blanks at regular intervals, preferably by means of a special conveyor.

The control unit is programmed to move the dosing cups between the dosing station, the pressing station and the sintering zone, and is advantageously configured to automatically synchronise the dosing, handling, depositing, pressing, sintering and accumulating operations. In this way, all the operational steps can be coordinated reliably and flexibly, even with any unforeseen events or local downtime.

The Applicant has thus created a plant for the production of coining blanks that ensures the precision and the repeatability in the dosing of fine metal powders (such as, for example, silver), which tend to compact, adhere to the surfaces and create weight fluctuations.

In particular, the conveyor/weighing unit system beneath each dosing cup allows a precise, real-time control of the weight actually dosed.

However, the use of cyclically reusable dosing cups ensures the traceability and the mechanised handling of the contents, reducing human intervention and the risk of contamination.

Advantageously, each conveyor is controlled by the weight detected by the weighing unit; in practice, it is driven by a motor electronically controlled according to the weight detected by the weighing scale.

In order to allow the flexible and automatic management of the blanks awaiting treatment, also in the event of a stoppage of the furnace, the Applicant has provided an accumulation bay, between the pressing station and the sintering zone, suitable for receiving and automatically storing the blanks awaiting sintering. In this way, it is possible to maintain the operational autonomy of the line, avoiding blockages and congestion upstream.

Advantageously, the plant according to the invention is provided with automated means for the handling, between the dosing station and the pressing station, of the dosing cups filled with metal according to the compliant weight. These automated means are suitable for pouring the metal powder contained in the dosing cup into a mould inside the pressing station and the preliminary compaction and, advantageously, the uniform distribution of the metal powder.

The dosing cups may preferably also serve as pads for the initial compaction.

In particular, advantageously, the deposition of the powders is followed by a pre-compaction carried out by the automated means in order to improve the quality of the blank produced.

In addition, the automated means provide for the transfer of the blanks from the pressing station to the sintering zone or, alternatively, to the accumulation bay.

Advantageously, the automated means are programmed to clean the mould automatically after a predetermined number of processing cycles.

This enables the automation of multiple operational steps in a compact system (movement of the dosing cups, pouring of the powder, "manual-free" pre-compaction, handling of the coining blank and, as mentioned, cleaning of the mould), thereby drastically reducing downtime, eliminating the operators along the process, and improving the hygiene and the cycle repeatability.

The automated means preferably comprise an anthropomorphic robot configured for:
picking up the dosing cups, having the correct dose, and their transfer to the pressing station,
pouring the powder contained in the dosing cups in a calibrated manner into the cavity of the mould and performing the pre-compaction and homogenisation of the powder,
picking up the blanks obtained from the press and depositing them on the conveyor to the sintering furnace or, alternatively, to the accumulation bay, repositioning of the empty dosing cups on the input conveyor of the dosing station, and, if necessary,
cyclic cleaning of the mould.

Preferably, the dosing cups are all cyclically reusable through the robotic circuit and the dosing station.

Protection is also required for an automatic line for the production of sintered metal components, which comprises a metal powder dosing device, associated with a plurality of fillable dosing cups, each of which is configured to receive a predetermined quantity of powder, and a transport system configured to move the dosing cups between operating stations of the line itself. In addition, a weighing unit is provided associated with the dosing device, configured to determine the weight of the powder dosed in each cup and control means are present to evaluate the conformity of the dose to the predetermined value and divert the non-compliant cups towards a reject outlet.

Another aspect of the invention relates to an automated process for the production of blanks from metal powder, preferably carried out with such a plant, comprising the following steps.

The silver powder is automatically dosed into all the dosing cups of the dosing device by means of a dedicated conveyor and a weighing unit, until a predetermined compliant weight is reached.

The dosing cups of the predetermined weight, that is, the weight required to make the blank, are then moved from the dosing station to the pressing station. Here, the metal powder contained in the dosing cup is poured into a mould positioned inside the pressing station. Preferably, the metal powder is preliminarily compacted in a non-manual manner. The pressed blank (known in the technical jargon as the "green part") is then transferred from the pressing station to the sintering zone or, alternatively, to the accumulation bay.

In particular, the green part is the coin produced by the pressing alone, that is, it has not yet undergone the heat treatment that compacts and permanently bonds the particles together (which will be fired in the furnace to produce the sintered blank).

When the blank (green part) with the compacted powder arrives at the sintering zone, the formation of the final sintered blank starts and, at the same time, the empty dosing cup is returned to the dosing station for a new cycle.

Advantageously, before pouring the metal powder contained in the dosing cup into the mould of the weighing station, there is a step for recovery of the previously pressed blank (green part) and its transfer to the sintering zone, or to the accumulation bay.

Preferably, there is also a step of automatic cleaning of the mould inside the pressing station, after a predetermined number of processing cycles.

Further features and advantages of the invention are more apparent in the detailed description below, with reference to a preferred, non-limiting embodiment of the plant for the production of coining blanks by sintering, illustrated by way of example and without limiting the scope of the invention, with the aid of the accompanying drawings, in which:
Figure 1 shows a perspective view of the plant 101 for the production of coining blanks by powder sintering;
Figure 2 shows a plan view from above of the plant 101 of Figure 1;
Figure 3 shows a perspective view of the automatic line 1 (with the dosing device 11 without casings and therefore with the interior in view) for the production of sintered metal components and the robot 5;
Figure 4 shows a perspective view of the hydraulic press 21;
Figure 5 shows a perspective view of the sintering furnace 31;
Figure 6 shows a perspective view of the accumulation bay 4.

The above-mentioned drawings show a preferred embodiment of a plant for the production of semi-finished coining products, or blanks, by powder sintering, according to the invention, which is denoted in its entirety by reference numeral 101 and which comprises a dosing station 10 for dosing metal powder, a pressing station 20 for pressing the metal powder and a sintering zone 30, interconnected by a centralised control unit, that is, a so-called PLC, which allows a dynamic synchronisation and customisation of the process parameters, favouring real time quality control and system scalability.

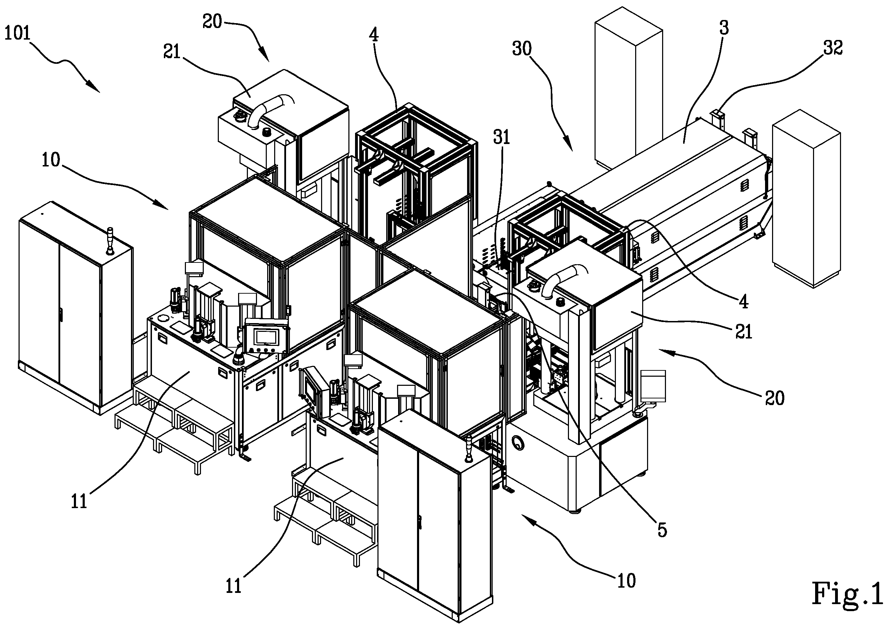

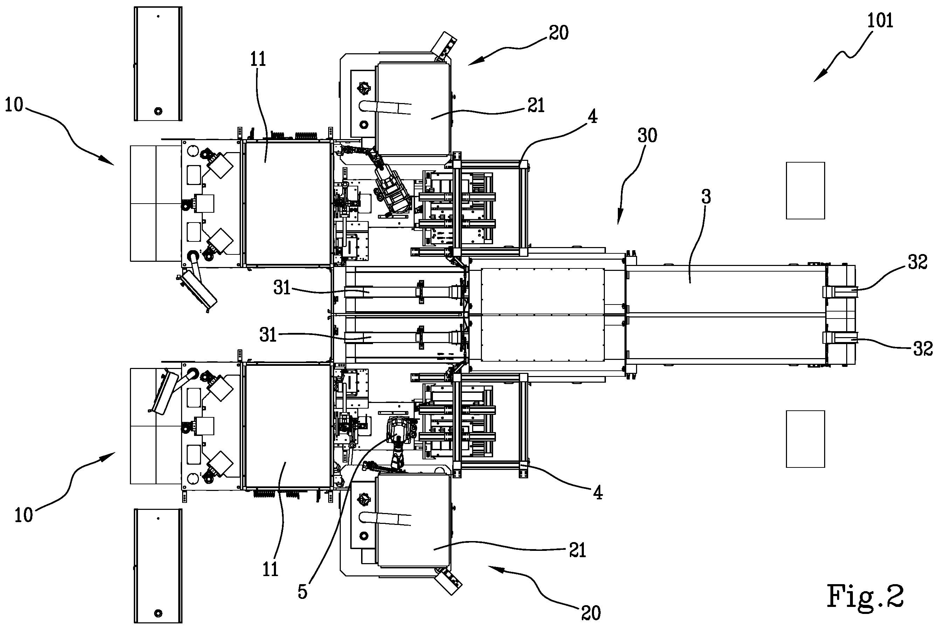

The dosing station 10 comprises a series of devices 11 for dosing the metal powder, each associated with a plurality of fillable dosing cups 12. All these dosing cups 12 are configured to receive a predetermined quantity of metal powder intended to form the blank (Figures 1 and 2). There is also, for each dosing device 11, a conveyor, that is, a screw conveyor, that conveys the metal powder to a discharge nozzle. The screw conveyor operates together with a weighing unit, that is, a precision weighing scale, positioned beneath each dosing cup 12, configured to determine the weight of the dose in real time.

By means of the PLC, the weighing scale controls the screw conveyor which is driven by an electronically controlled motor depending on the weight detected by the weighing scale.

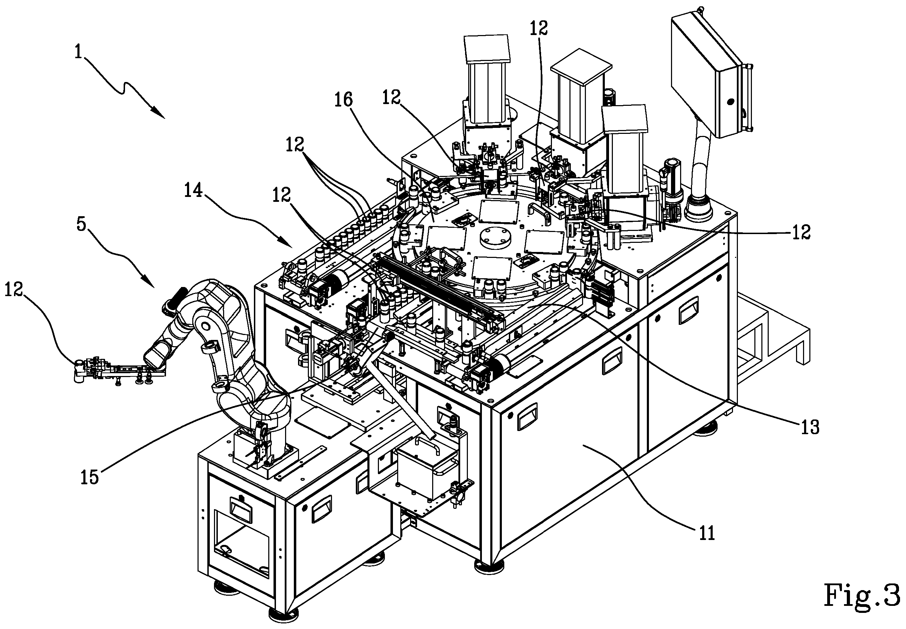

The empty dosing cups 12, that is, those to be filled with the metal, are transported by an input belt 13 into the dosing station 10, while there is an output belt 14 from the same dosing station 10 for those cups correctly filled, with a compliant dose, and a second output belt 15 for the dosing cups 12 with out-of-tolerance weight (Figure 3). Obviously, the dosing cups 12 discarded, from the second belt 15, are sent to a recycling circuit for the recovery of the metal powders and of the dosing cup 12 itself.

In the preferred embodiment, each dosing device 11 is circular in shape; in practice, a carousel 16 is provided, around which the dosing cups 12 are arranged, which - rotating around the centre of the carousel 16 - as they move they pass empty cups from the input belt 13, reaching the screw conveyor and weighing scale system, and then, when full, proceed towards the output belt 14 (or towards the second output belt 15).

In detail, the discharge nozzle is advantageously opened and closed by means of a plunger mechanism which is suitable for engaging in the end portion of the nozzle and which, moving between these two extreme positions, respectively allows or prevents the escape of powders.

Further, a vibration system is preferably provided inside the dosing cup 12 to prevent the powder from caking.

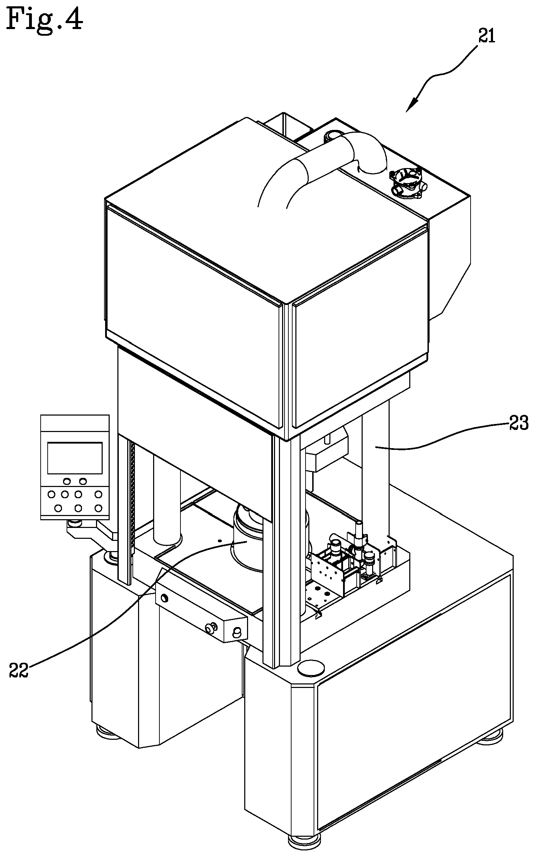

In the pressing station 20 there is a hydraulic press 21 for compacting the metal powder into a blank (Figure 4). The powder is poured into a specially configured mould 22, and the hydraulic press 21 advantageously comprises hydraulic actuators, preferably four-column actuators 23, which are capable of exerting a force of at least 100 tonnes.

A press of this type ensures uniform compaction of the powder to obtain a blank with sufficient density and geometry to withstand the handling and the sintering, even for noble powders with a high unit cost.

In addition, the use of a hydraulic press 21 with four columns 23 ensures homogeneous distribution of the force and geometric repeatability between the blanks.

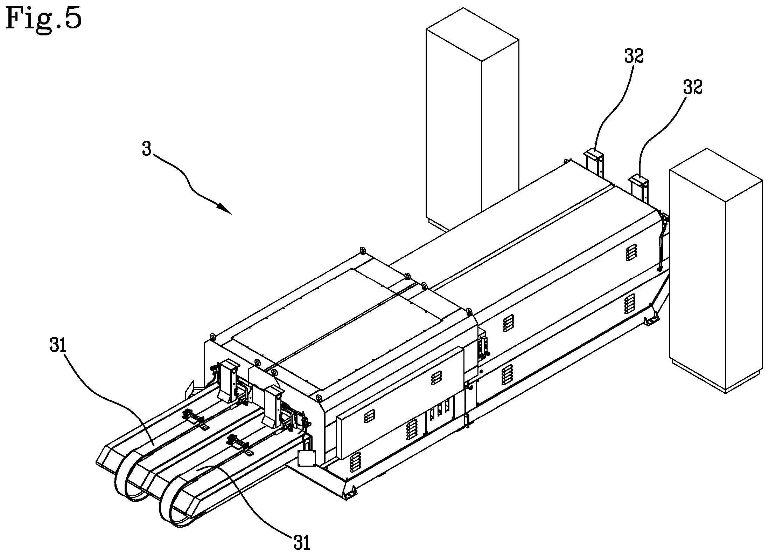

The sintering zone 30 consists of a sintering furnace 3 fed by a conveyor belt 31, the latter suitable for receiving the blanks at regular intervals (Figure 5). The integrated conveyor belt 31 allows the load to be managed automatically without stopping the line.

The sintering furnace 3 operates with electrical resistors capable of maintaining stable operating temperatures up to 900°C. In particular, it can be preheated to 800°C in about 90 minutes. This allows the Applicant to carry out a continuous sintering cycle with precise temperature control (up to 900°C), avoiding thermal shocks and maintaining a high production rate of one blank every 17-18 seconds.

The intervals are given by the previous process part.

The centralised PLC control unit is configured to automatically synchronise the dosing, movement, pressing, sintering, and accumulation operations and, among other tasks, manages the transport of the dosing cups 12 between the dosing station 10, the pressing station 20 and the sintering zone 30.

An anthropomorphic robot 5 is mounted in a central area of the plant, configured to pick up the dosing cups 12 from the output belt 14 that have a compliant dose and then transfer them to a pressing station, pour the powder contained in the cup into the cavity of the mould 22 and preliminarily compact it using the bottom of the cup itself, pick up the blank green part obtained from the press and place it on a loading belt of a sintering furnace 3, or alternatively in an accumulation bay, and finally reposition the empty cups on the input belt of the dosing station.

The robot 5 also cyclically cleans the mould 22 using a brush and a vacuum extractor.

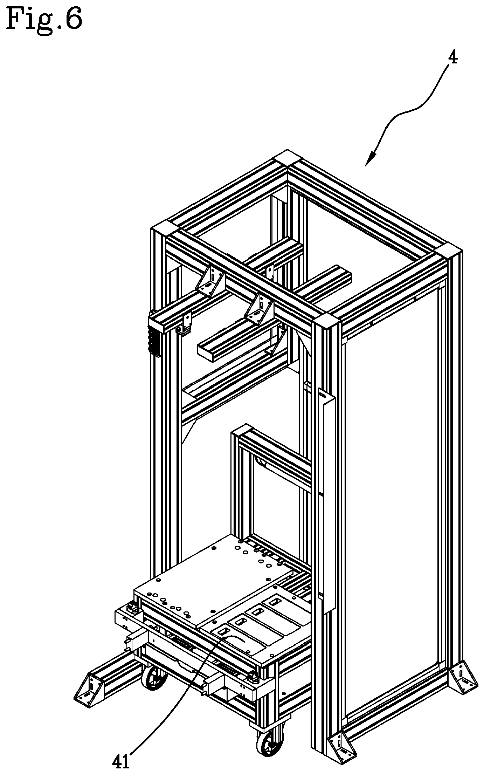

An accumulation bay 4 (Figure 6) is located between the pressing station 20 and the sintering zone 30 which has a structure with movable carriages and vertically stackable trays 44**.** The accumulation bay 4 has been designed to automatically receive and store the blanks awaiting sintering.

The stackable trays 44 are intended for the depositing of blanks during periods when the sintering furnace is inactive and the accumulation bay 4 can hold a sufficient number to cover the entire production of a night shift.

The automated process for making blanks from metal powder, which is carried out in the plant 1, comprises automatically dosing the silver powder in at least one dosing cup 12 by means of the screw conveyor, which has the task of conveying the metal powder, and the precision weighing scale, until a predetermined compliant weight is reached. The full dosing cups 12, each of compliant weight, are then transferred from the dosing station 10 to the pressing station 20 by means of the output belt 14. Upon arrival at the dosing station 10, the metal powder contained in the dosing cup 12 is poured into the cavity of the mould inside the pressing station 20 and preliminarily compacted - by the robot 5 - using the bottom of the dosing cup 12 itself.

The pressed metal powder is then conveyed from the pressing station 20 to the sintering zone 30 (or alternatively to the accumulation bay 4) where the sintering cycle is started inside a sintering furnace 3, to form the sintered blank.

In the electric sintering furnace 3, the unsintered blank is sintered at 900°C. The transport is carried out by means of the conveyor belt 31, which is able to load the blanks continuously. The actual rate is 17-18 seconds due to the preceding robotic handling step; the blank made is then ejected through an outlet mouth 32.

At the same time, the empty dosing cup 12 is returned to the dosing station 10 for a new cycle.

Before pouring the metal powder contained in dosing cup 12 into the cavity of the mould 22 inside the weighing station P and compacting it, the previously compacted blank is retrieved from the pressing surface and transferred to the sintering zone 30 (or to the accumulation bay 4), in order to speed up the process steps.

The mould 22 inside the pressing station 20 is automatically cleaned by the robot 5 after a predetermined number of processing cycles.

From the above, it can be seen how the invention achieves the proposed purpose and aims, and in particular it should be noted that a plant for the production of blanks by powder sintering is created and the relative automated process for producing the blanks, which ensures a perfect dosing of metal powder for each blank to be produced, according to the selected weight and the planned metal composition.

This ensures compliance with the weight and size parameters from the initial step of the process.

In particular, the dosing line selected, through the screw conveyor and weighing scale system under each dosing cup, enables a precise control in real time of the weight effectively dosed.

Another advantage of the plant for the production of coining blanks according to the invention is that it is fully automated and is capable of accurately dosing the quantity of metal powder to be used for each blank without the need for manual interventions between the various steps of the process.

Another advantage of the present invention is that it is extremely versatile, allowing considerable cost savings.

Lastly, the plant and the relative process are applicable on a large scale in the monetary and industrial sectors.

The invention described can be modified and adapted in several ways without thereby departing from the scope of the inventive concept.

Moreover, all the details of the invention may be substituted by other technically equivalent elements.

In practice, the materials used, as well as the dimensions, may be of any type, depending on requirements, provided that they are consistent with their production purposes.

## Claims

1. A plant (101) for the production of semi-finished coining products by powder sintering comprising a station (10) for dosing a metal powder, a pressing station (20) for pressing said metal powder and a sintering zone (30) interconnected to each other by means of a control unit, wherein the dosing station (10) comprises:
at least one dosing device (11) for dosing the metal powder associated with a plurality of fillable dosing cups (12), each configured to receive a predetermined quantity of metal powder;
a conveyor of the metal powder towards a discharge; and
a weighing unit, positioned under each dosing cup (12), configured to determine the weight of the dosed metal powder in real time;
the pressing station (20) being provided with a hydraulic press (21) for compacting the metal powder into blanks;
the sintering zone (30) including a sintering furnace (3) suitable for receiving the blanks at regular intervals;
the control unit being suitable for moving the dosing cups (12) between the dosing station (10), the pressing station (20) and the sintering zone (30).

2. The plant (101) according to claim 1, wherein each conveyor is controlled by the weight detected by the weighing unit.

3. The plant (101) according to claim 1 or 2, comprising an accumulation bay (4), preferably interposed between the pressing station (20) and the sintering zone (30), suitable for receiving and storing automatically the blanks awaiting sintering.

4. The plant (101) according to claim 3, wherein stackable trays (44) are provided in the accumulation bay (4) along a direction normal to the ground, suitable for depositing blanks during the inactivity of the sintering zone (30).

5. The plant (101) according to one or more of claims 2 to 4, comprising automated means (5) for:
moving the dosing cups (12) of compliant weight between the dosing station (10) and the pressing station (20);
pouring the metal powder contained in the dosing cup (12) into a mould (22) inside the pressing station (20); and
transferring the blanks from the pressing station (20) to the sintering zone (30) or to the accumulation bay (4).

6. The plant (101) according to claim 5, wherein the automated means (5) are programmed to clean the mould (22) automatically after a predetermined number of processing cycles.

7. The plant (101) according to any one of claims 1 to 6, wherein the sintering zone (30) comprises an electric furnace (3) fed cyclically by means of a conveyor belt (31).

8. An automatic line (1) for the production of sintered metal components, comprising:
a dosing device (11) for dosing the metal powder, associated with a plurality of fillable dosing cups (12), each configured to receive a predetermined quantity of powder;
a transport system (13, 14) configured to move the dosing cups (12) between operating stations (10, 20, 30) of the line;
a weighing unit associated with the dosing device (11), configured to determine the weight of the metal powder contained in each dosing cup (12); and
control means to evaluate the conformity of the dose to the predetermined value and to divert the non-conforming dosing cups (12) towards a reject outlet.

9. An automated process for producing sintered coins and medals from metal powder, comprising the following steps:
- automatically dosing the silver powder in at least one dosing cup (12) by means of a metal powder conveyor and a weighing unit, until a predetermined compliant weight is reached;
- moving the dosing cups (12) of compliant weight from the dosing station (10) to the pressing station (20);
- pouring the metal powder contained in the dosing cup (12) into a mould (22) inside the pressing station (20);
- transferring the blanks from the pressing station (20) to the sintering zone (30);
- starting the sintering cycle to form a semi-finished coining product; and
- returning the empty dosing cup (12) to the dosing station (10) for a new cycle.

10. The automated process according to claim 9, wherein the step of recovering the previously compacted blanks and transferring them to the sintering zone (30) is provided, before pouring the metal powder contained in the dosing cup (12) into the mould (22) of the weighing station (20).

11. The process according to one or more of claims 9 or 10, comprising the step of automatically cleaning the mould (22) inside the pressing station (20) after a predetermined number of processing cycles.
